# EUROPEAN PATENT APPLICATION

(11) **EP 1 625 795 A1**
(43) Date of publication of application: **15.02.2006**
(21) Application number: 05107347.6
(22) Date of filing: 10.08.2005
(51) Int. Cl.: A23C 9/12, A23C 9/127

(54) **Vitamin B12 production in fermented milk products**

(30) Priority: 10.08.2004 NL 1026818
(71) Applicant: Campina Nederland Holding B.V., 5301 LB Zaltbommel (NL)
(72) Inventor: Bruinenberg, Paul Gerard, 5071 KE, Udenhout (NL); Smid, Eilt Johannes, 6708 LG, Wageningen (NL)
(74) Representative: van Westenbrugge, Andries

(57) **Abstract**

Disclosed is a fermented milk product having an increased content of *in situ* produced vitamin B12, wherein at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* are present, which result in a content of *in situ* produced vitamin B12 of preferably at least 120 % of the content *of in situ* produced vitamin B12 achieved in absence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri.* The invention also relates to a method of preparing such a fermented milk product having an increased content of *in situ* produced vitamin B12, wherein milk is fermented making use of a common starter culture, and to the use of the aforementioned bacteria for increasing the content of *in situ* produced vitamin B12 in a fermented milk product.

## Description

The invention pertains to a fermented milk product with an increased content of *in situ* produced vitamin B 12, to a method for preparing a fermented milk product having an increased content of *in situ* produced vitamin B12, as well as to the use of bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* for increasing the content of *in situ* produced vitamin B12 in a fermented milk product.

Vitamin B12 is required for the production of red blood cells and for a good performance of the nervous system. Animal products such as meat and dairy products exclusively provide vitamin B12. Especially people that do not consume meat products, such as for instance vegetarians, are at risk of absorbing insufficient amounts of vitamin B12, i.e. less than the recommended daily dose.

Fermented milk products, such as for instance yoghurt, can provide a considerable contribution to the recommended daily dose of vitamin B12; 200 ml yoghurt provides for instance about 20 % of this amount of vitamin B12. Nevertheless, in the field there is a need to enrich fermented milk products with vitamin B12, in order to make it easier to meet the recommended daily dose thereof. Such an enrichment can be achieved by adding the vitamins in chemically (partly) pure form to the fermented milk product. However, this is disadvantageous from a cost point of view and has the further disadvantage that it concerns an *ex situ* produced product that possibly negatively affects the taste of the yoghurt. In addition, from a consumer acceptance point of view of a new product, the need exists to increase the content of vitamins which are naturally present in yoghurt, i.e. by fermentation. Thus, in the field there is a need for *in situ* production of the content of one or more vitamins, i.e. in the fermented milk product itself.

It was found in US 2,715,602, filed in 1951, that high yields of vitamin B12 can be produced in the fermentation of nutriet mashes, for instance in the manufacture of high grade Emmenthaler or Swiss cheese, by species of *Propionibacterium freudenreicchii* and *P. shermanii*, if adding about 1.1 milligram cobalt ions per liter growth medium. It does not require further explanation that the use of cobalt salts in food-grade products is nowadays avoided.

It is known that *Propionibacterium shermani* no. 2 bacteria can be added to fermented milk products to increase the content of *in situ* produced vitamin B12 ( 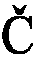 erná and Hrabová. Milchwissenschaft 1977, vol. 32(5): 274-277: Biological enrichment of fermented milk beverages with vitamin B12 and folic acid).

Recently it is found that cell extracts of *Lactobacillus reuteri* CRL1098, which cells were cultured in synthetic growth medium, exhibited vitamin B12 biosynthesis (Taranto et al., J. Bacteriol. 2003, vol. 185(8), pp. 5643-5647). In this publication it is also suggested that *Lactobacillus reuteri* CRL1098 could be a suitable candidate for the production of vitamin B12 in a foodstuff, only if the fact that vitamin B12 was not secreted and remained localised in the cell cytoplasm, could be overcome.

Four more strains have now surprisingly been identified that can increase the content of *in situ* produced vitamin B12 in a fermented milk product and thus can be used in the preparation of a fermented milk product to realise this increase.

In a first aspect the invention thus relates to a fermented milk product having an increased content of *in situ* produced vitamin B12, wherein at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* are present, which result in a content of *in situ* produced vitamin B12 of preferably at least 120 % of the content of *in situ* produced vitamin B12, which is achieved in absence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri.* The fermented milk product does not contain cobalt ions in a detectable amount.

The term "fermented milk product" as used herein refers to all products that can be prepared by fermentation of milk with a specific starter culture. Non-limiting examples include yoghurt, kefir, curd cheese, curd, buttermilk, butter, fresh cheese and semi-solid cheese.

The preparation of such a fermented milk product is usually performed by fermentation of milk in the presence of a suitable starter culture.

As used herein, the term "starter culture" comprises all microorganisms that are provided to the milk for fermentation. This term can thus comprise one or more starter cultures that are provided to the milk as separate batches or that are first combined before addition to the milk. The one or more starter cultures can also be commercial starter culture preparations, such as for instance culture 1^{st}/RR available from CSK food enrichment and A1 available from Danisco.

The common starter culture for fermentation is dependent on the fermented milk product to be prepared. A person skilled in the art will know which common starter culture to select, depending on the fermented milk product to be prepared. Examples of common starter cultures are starter cultures comprising *Lactobacillus delbruecki spp. bulgaricus* and *Streptococcus thermophilus* for yoghurt; *Lactobacillus acidophilus, Bifidobacterium* and *Streptococcus thermophilus* for mild yoghurt; mesophilic mixed cultures consisting of *Lactococcus lactis* spp. *lactis*/*cremoris, Leuconostoc* spp., *Lactococcus lactis* spp. *lactis* var. *diacetylactis* for curd, fresh cheese, butter and semi-solid cheese.

The content of *in situ* produced vitamin B12 in a fermented milk product depends on many factors, such as the starter culture used, the vitamin B12 content of the milk, in case of a mixed starter culture the ratio between the bacteria, temperature during fermentation, time of fermentation, storage conditions etc..

With the term "*in situ*" as used herein it is understood in the fermented milk product itself.

As used herein, the content of *in situ* produced vitamin B12 is compared to the same content in absence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri.* The reference point thus concerns an identical fermented milk product which is prepared only in the presence of a common starter culture. This content is considerably, especially after 14 days storage at a temperature in the range of 2 - 8 °C, preferably about 4 °C, such as for instance at least 120 %, preferably at least 130 %, more preferably at least 140 %, even more preferably at least 150 %, most preferably at least 170 %, in particular at least 190 % of the content that is found in a fermented milk product which is prepared under similar or identical fermentation and storage conditions, with the same starter culture, in absence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri.* The content of *in situ* produced vitamin B12 in the presence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* will at most be about 500 % relative to the content of *in situ* produced vitamin B12 that is achieved in absence of these bacteria.

In an embodiment of the invention at least bacteria of the strain *Propionibacterium freudenreichi* spp shermani B369 and/or bacteria of the subspecies *Propionibacterium freudenreichi* spp *freudenreichi* are present in the fermented milk product. These bacteria are especially suitable for use in the fermented milk product, because they can provide a particularly large increase of the content of *in situ* produced vitamin B12. The presence of these bacteria can increase the content of *in situ* produced vitamin B12 to at least 150 %, preferably at least 170 %, more preferably at least 190 % relative to the content of *in situ* produced vitamin B12 that is achieved in absence of these bacteria.

Preferably at least the bacteria of the subspecies *Propionibacterium freudenreichi spp freudenreichi* are present in the fermented milk product according to the invention. It is found for the first time that these bacteria can produce vitamin B12 in a fermented milk product.

More preferably at least bacteria of the strain *Propionibacterium freudenreichi* spp *freudenreichi* B374 and/or *Propionibacterium freudenreichi* spp *freudenreichi* B2336 are present in the fermented milk product according to the invention. It was found that these strains increase the vitamin B12 content in the fermented milk product at least 170 % compared to the reference fermented milk product.

In another embodiment of the invention at least bacteria of the species *Lactobacillus reuteri* are present in the fermented milk product according to the invention. It is now found for the first time that bacteria of the species *Lactobacillus reuteri* can increase the content of *in situ* produced vitamin B12. These bacteria are especially preferred because it is known that bacteria of the species *Lactobacillus reuteri* can also have probiotic properties, thus resulting in a two-fold effect.

It is preferred that at least bacteria of the strain *Lactobacillus reuteri* B1533 are present in the fermented milk product according to the invention, as it is the first *Lactobacillus reuteri* strain which is shown to produce vitamin B12 in a fermented milk product. Moreover, it is found that this strain produces propionic acid in such a product, which provides the product with a slightly sweet taste, which can be very advantageous for example in case of a yoghurt.

The strains *Propionibacterium freudenreichi* spp shermani B369, *Propionibacterium freudenreichi* spp *freudenreichi* B374, *Propionibacterium freudenreichi* spp *freudenreichi* B2336 and *Lactobacillus reuteri* B1533 are deposited on 14 July 2004 in accordance with the Budapest treaty with the Central Bureau for Fungus Cultures in Utrecht, and are appointed the deposit numbers CBS 115914, CBS 115915, CBS 115916 and CBS 115917, respectively.

It is also possible to use combinations of one or more of the bacteria of the strain *Propionibacterium freudenreichi* spp shermani B369, bacteria of the subspecies *Propionibacterium freudenreichi* spp *freudenreichi* and bacteria of the species *Lactobacillus reuteri.*

In an embodiment of the invention the fermented milk product can be prepared by fermentation of milk in the presence of a common starter culture and at least bacteria of the strain *Propionibacterium freudenreichi* spp shermani B369, bacteria of the subspecies *Propionibacterium freudenreichi* spp *freudenreichi* and/or bacteria of the species *Lactobacillus reuteri.* The common starter culture and these bacteria are provided to the milk before fermentation, after which the milk is fermented under conventional fermentation conditions in the presence of the starter culture and the bacteria, to obtain the fermented milk product according to the invention. It is found that a considerable amount of *in situ* produced vitamin B12 is produced during fermentation, especially when using *Propionibacterium freudenreichi* spp shermani B369, *Propionibacterium freudenreichi spp freudenreichi* B374 and *Propionibacterium freudenreichi spp freudenreichi* B2336. Especially with *Lactobacillus reuteri* B1533 it was found that the content of *in situ* produced vitamin B12 increased during storage for 7 - 14 days at a temperature in the range of 2 - 8 °C.

With the term "conventional fermentation conditions" as used herein it is meant that fermentation of the milk to the fermented milk product is performed at conditions which are similar or identical to the fermentation conditions in the absence of the bacteria according to the invention. The conventional fermentation conditions are dependent on the fermented milk product to be prepared and the applied starter culture. A person skilled in the art will be capable of easily determining the conventional fermentation conditions.

In a further embodiment of the invention the fermented milk product can be prepared by fermentation of milk in the presence of a common starter culture and the addition of at least the bacteria of the invention after fermentation. It is found that during fermentation and during storage at a temperature in the range of 2 - 8 °C for 7 - 14 days the bacteria of the genus Propionibacterium do not grow, but remain metabolic active, i.e. produce vitamin B12. Bacteria of the subspecies *Lactobacillus reuteri* grow under fermentation conditions but not under storage conditions, and remain metabolically active under both conditions and thus produce vitamin B12.

It can be important to preculture at least bacteria of the strain *Propionibacterium freudenreichi* spp shermani B369, bacteria of the subspecies *Propionibacterium freudenreichi spp freudenreichi* and bacteria of the species *Lactobacillus reuteri,* before adding these bacteria to the milk of the fermented milk product, wherein precultivating is performed in a medium that enhances the *in situ* vitamin B12 production, such as for example a medium of milk and bacto-casiton (Difco Laboratories, Le Pont de Claix, France) or lactate medium [0.5 %(w/v) trypton (Sigma-Aldrich, Steinheim, Germany), 1.0 %(w/v) yeast extract (Sigma-Aldrich), 2.5 %(w/v) sodium lactate (Sigma-Aldrich), 0.48 %(w/v) sodium acetate (Merck, Darmstadt, Germany)] or a medium consisting of (hydrolysed) milk and whey powder. The medium described in 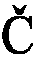 erná and Hrabová (1977) for enhancing the *in situ* vitamin B12 production can also be used for this enhancement.

Alternatively, an acidic culture extract of bacteria of the strain *Propionibacterium freudenreichi* spp shermani B369, bacteria of the subspecies *Propionibacterium freudenreichi spp freudenreichi* and/or bacteria of the species *Lactobacillus reuteri* can be applied. Besides, it can be advantageous to ferment the milk in a first step with bacteria of the strain *Propionibacterium freudenreichi* spp shermani B369, bacteria of the subspecies *Propionibacterium freudenreichi* spp *freudenreichi* and/or bacteria of the species *Lactobacillus reuteri* to increase the content of *in situ* produced vitamin B12, where after in a second step the thus prefermented milk is subjected to a further fermentation step according to conventional methods, i.e. with a suitable starter culture(s) under suitable fermentation conditions, to obtain the fermented milk product.

In another preferred embodiment the fermented milk product is yoghurt. Especially in yoghurt a considerably increased amount of *in situ* produced vitamin B12 was found. Moreover, the aforementioned bacteria produce propionic acid in yoghurt, which provides the product with a pleasant, slightly sweet taste.

In a second aspect the invention relates to a method of preparing a fermented milk product having an increased content of *in situ* produced vitamin B12, wherein milk is fermented making use of a common starter culture, wherein the content of the *in situ* produced vitamin B12 is increased by the presence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri.* The addition of cobalt ions is required nor favoured in the method of the invention.

The presence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* increases the content of *in situ* produced vitamin B12 preferably at least 120 %, more preferably at least 130 %, even more preferably at least 140 %, even more preferably at least 150 %, most preferably 170 %, in particular at least 190 %, compared to the content of *in situ* produced vitamin B12, which is achieved in the absence of at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri.* The presence of one or more of the bacteria belonging to this group can provide an increase in the content of *in situ* produced vitamin B12.

It is preferred that the method is performed under anaerobic conditions, i.e. no stirring is applied during fermentation.

In an embodiment of the invention at least bacteria of the strain *Propionibacterium freudenreichi* spp shermani B369 and/or bacteria of the subspecies *Propionibacterium freudenreichi* spp *freudenreichi* are present. It was found that especially these bacteria could increase the content of *in situ* produced vitamin B12 considerably.

Because of aforementioned reasons, in a further embodiment at least bacteria of the subspecies *Propionibacterium freudenreichi* spp *freudenreichi* are present in the fermented milk product according to the invention.

In yet another embodiment at least bacteria of the strain *Propionibacterium freudenreichi* spp *freudenreichi* B374 or *Propionibacterium freudenreichi* spp *freudenreichi* B2336 are present.

In an alternative embodiment according to the invention at least bacteria of the species *Lactobacillus reuteri,* preferably at least bacteria of the strain *Lactobacillus reuteri* B1533, are present, because of the aforementioned reasons.

It is preferred that the fermented milk product according to the invention is yoghurt, as especially in this product the taste is improved because of the production of propionic acid in the fermented milk product, which provides the yoghurt with a pleasant slightly sweet taste.

In a third aspect the invention relates to the use of bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* for increasing the content of *in situ* produced vitamin B12 in a fermented milk product

In an embodiment the bacteria are selected from the group consisting of at least bacteria of the strain *Propionibacterium freudenreichi* spp shermani B369 and bacteria of the subspecies *Propionibacterium freudenreichi* spp *freudenreichi,* because of reasons already mentioned above.

It is preferred that the bacteria are selected from bacteria of the subspecies *Propionibacterium freudenreichi spp freudenreichi*.

More preferably, the bacteria are selected from bacteria of the strain *Propionibacterium freudenreichi* spp *freudenreichi* B374 and *Propionibacterium freudenreichi spp freudenreichi* B2336.

In another embodiment the bacteria are selected from bacteria of the species *Lactobacillus reuteri,* in particular bacteria of the strain *Lactobacillus reuteri* B1533.

In a preferred embodiment the fermented milk product is yoghurt, because of aforementioned reasons.

The invention will be explained in the following part by means of examples, in connection to the figures, in which the following is shown:
Fig. 1 shows the content of *in situ* produced vitamin B12 in yoghurt which is prepared with *Propionibacterium freudenreichi* spp shermani B369 and *Propionibacterium freudenreichi* spp *freudenreichi* B374, respectively. Also shown is the content of *in situ* produced vitamin B12 in a reference yoghurt prepared in the absence of these bacteria (MUH306). MUH306 is a starter culture for yoghurt that is already available for a long time and can be obtained from NIZO Food Research, The Netherlands.
Fig. 2 shows the content of *in situ* produced vitamin B12 in yoghurt which is prepared with *Propionibacterium freudenreichi* spp *freudenreichi* B2336, after preculture in milk or in lactate medium, respectively.

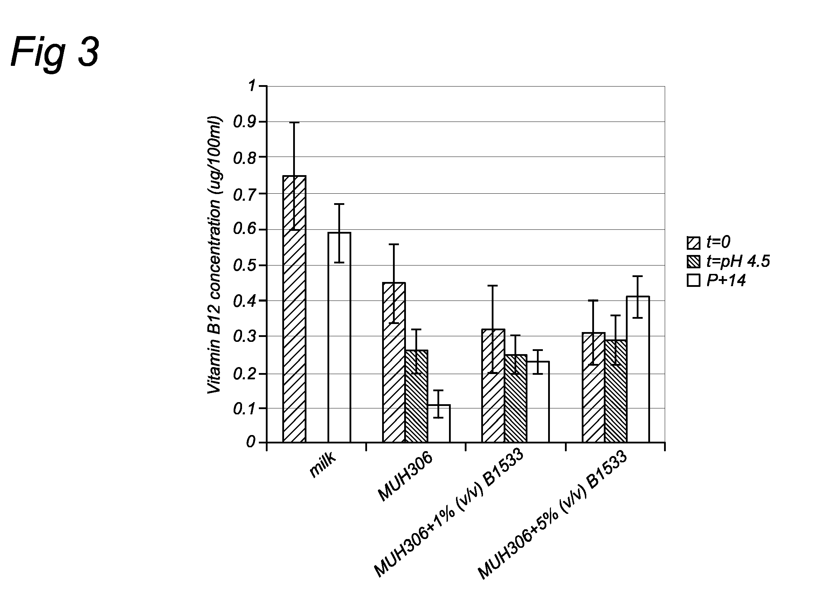

Fig. 3 shows the content of *in situ* produced vitamin B12 in yoghurt which is prepared with *Lactobacillus reuteri* B1533.

### EXAMPLES

### Example 1. Preparation of yoghurt with the bacteria of the invention

*Propionibacterium freudenreichi* spp shermani B369, *Propionibacterium freudenreichi* spp *freudenreichi* B374, *Propionibacterium freudenreichi spp freudenreichi* B2336 and *Lactobacillus reuteri* B1533 were precultured in milk with 0.1 wt(w/v) bacto-casiton (Difco Laboratories, Le Pont de Claix, France) as additional nitrogen source, or, where mentioned, in lactate medium, until maximum cell counts.

Next, a yoghurt was prepared by co-cultivation in yoghurt milk with the indicated inoculum of the culture, together with 0.2 %(v/v) yoghurt culture concentrate MUH306. The preculture and yoghurt were prepared under anaerobic conditions at 30 °C and 37 °C, respectively, in case of (co-)fermentation with *Propionibacterium* and *Lactobacillus reuteri* strains, respectively.

The cell counts of the specific strains, the vitamin concentration and the concentrations of lactic acid, acetic acid and propionic acid in precultures and yoghurt samples was determined preceding fermentation (t=0), after completion of fermentation when pH 4.5 was reached (t=pH 4.5) and after 14 days of storage at 4 °C (P+14).

The vitamin B12 content was determined using a microbiological test which uses *Lactobacillus delbruecki* ATCC 7830 according to G.F.M. Ball (1998, In: Bioavailability and analysis of vitamins in Food, red. Chapman & Hall, London, pp. 497 - 515).

The results are shown below.

**Table 1. Cell counts (cfu/ml) Propionibacterium freudenreichi spp shermani B369 and Propionibacterium freudenreichi spp freudenreichi B374 in precultures and prepared yoghurt.**

| | t=0 | t=pH 4.5 | t = P+14 |
|---|---|---|---|
| Preculture B369 | 2.0 x 10⁸ | | |
| MUH306 reference yoghurt | - | - | - |
| MUH306 + 1%(v/v) B369 | 9.0 x 10⁵ | 1.0 x 10⁶ | 8.0 x 10⁵ |
| MUH306 + 5%(v/v) B369 | 7.5 x 10⁶ | 8.0 x 10⁶ | 1.0 x 10⁶ |
| Preculture B374 | 6.5 x 10⁸ | | |
| MUH306 + 1%(v/v) B374 | 3.1 x 10⁶ | 4.0 x 10⁶ | 3.0 x 10⁶ |
| MUH306 + 5%(v/v) B374 | 7.0 x 10⁷ | 1.0 x 10⁸ | 4.3 x 10⁷ |

| | | | |
|---|---|---|---|
| -: not present | | | |

These results clearly show that during yoghurt fermentation and storage at 4 °C no growth of *Propionibacterium freudenreichi* spp shermani B369 and *Propionibacterium freudenreichi spp freudenreichi* B374 is observed.

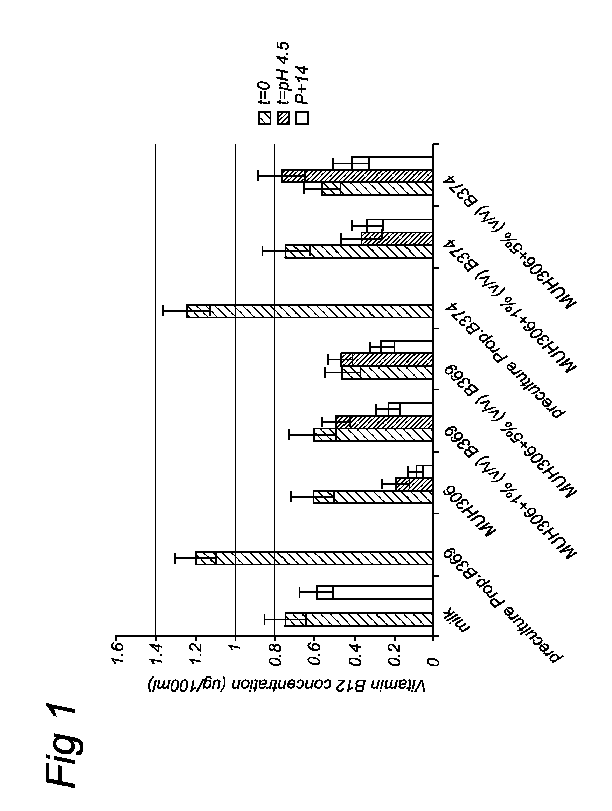

Fig 1 shows the *in situ* production of vitamin B12 in yoghurt which was prepared with *Propionibacterium freudenreichi* spp shermani B369 or *Propionibacterium freudenreichi* spp *freudenreichi* B374. It is known that in fermented milk products, such as yoghurt, the vitamin content decreases with 40 - 60 % because lactic acid bacteria require vitamin B12 for growth (K. Arkbåge, K. Witthöft, R. Fondén and M. Jågerstad, 2003, Int. Dairy J., vol. 13, pp. 101 - 109). The consumption of vitamin B12 continues during storage, which is confirmed in fig. 1. In the present case the content of *in situ* produced vitamin B12 after fermentation reduced with 70%, and after storage with even 86 %. In contrast hereto, yoghurt which was prepared with *Propionibacterium freudenreichi* spp shermani B369 or *Propionibacterium freudenreichi* spp *freudenreichi* B374 resulted in a two- to four-fold increase in the content of *in situ* reduced vitamin B12 compared to reference yoghurt measured after storage.

Although bacteria of the strains *Propionibacterium freudenreichi* spp shermani B369 and *Propionibacterium freudenreichi spp freudenreichi* B374 do not grow during fermentation, they nevertheless produce vitamin B12 during fermentation as well as during storage at a temperature in the range of 2 - 8 °C, *in casu* at 4 °C.

The chemical composition of the yoghurt thus prepared was also analysed (see table 2). In accordance with expectations propionic acid was produced in the presence of the *Propionibacterium* strains. At a 1 % inoculum the taste of the yoghurt was experienced as being mild and less acidic than that of the reference yoghurt, while at a 5 % inoculum the taste of the yoghurt was experienced as being extra slightly sweet. The sweet taste is due to the production of propionic acid. The yoghurt prepared with *Propionibacterium* strains also contained an increased amount of acetic acid in comparison with the reference yoghurt. The increased acetic acid content could not be observed by test persons.

**Table 2. Chemical composition of yoghurt prepared with Propionibacterium freudenreichi spp shermani B369 or Propionibacterium freudenreichi spp freudenreichi B374.**

| | Lactic acid (mg/kg) | Acetic acid (mg/kg) | Propionic acid (mg/kg) |
|---|---|---|---|
| MUH306 reference t = pH 4.5 | 6.38 | 18 | - |
| MUH306 reference t=P+ 14 | 8.20 | 19 | - |
| MUH306 + 1% (v/v) B369 t = pH 4.5 | 6.79 | 25 | 42 |
| MUH306 + 1% (v/v) B369 t=P+ 14 | 8.34 | 25 | 72 |
| MUH306 + 5% (v/v) B369 t = pH 4.5 | 6.69 | 74 | 44 |
| MUH306 + 5% (v/v) B369 t=P+ 14 | 7.83 | 94 | 47 |
| MUH306 + 1% (v/v) B374 t = pH 4.5 | 6.66 | 18 | 79 |
| MUH306 + 1% (v/v) B374 t=P+ 14 | 8.32 | 42 | 66 |
| MUH306 + 5% (v/v) B374 t = pH 4.5 | 6.88 | 177 | 88 |
| MUH306 + 5% (v/v) B374 t=P+ 14 | 7.74 | 173 | 146 |

| | | | |
|---|---|---|---|
| -: not detectable | | | |

### Example 2

**Table 3. Cell counts (cfu/ml) Propionibacterium freudenreichi spp freudenreichi B2336 in precultures in milk with Bacto-casiton or lactate medium (LB) as well as in prepared yoghurt.**

| | t=0 | t=pH 4.5 | t = P+14 |
|---|---|---|---|
| Milk Preculture B2336 | 4.1 x 10⁷ | | |
| MUH306 reference yoghurt | - | - | - |
| MUH306 + 1%(v/v) B2336 | 5.0 x 10⁵ | 1.8 x 10⁶ | 6.5 x 10⁵ |
| MUH306 + 5%(v/v) B2336 | 3.0 x 10⁶ | 4.5 x 10⁶ | 2.0 x 10⁶ |
| Lactate medium preculture B2336 | 5.5 x 10⁸ | | |
| MUH306 + 1%(v/v) B2336 (LB) | 4.2 x 10⁶ | 2.6 x 10⁶ | 5.4 x 10⁶ |
| MUH306 + 5%(v/v) B2336 (LB) | 1.5 x 10⁷ | 2.0 x 10⁷ | 3.4 x 10⁷ |

| | | | |
|---|---|---|---|
| -: not present | | | |

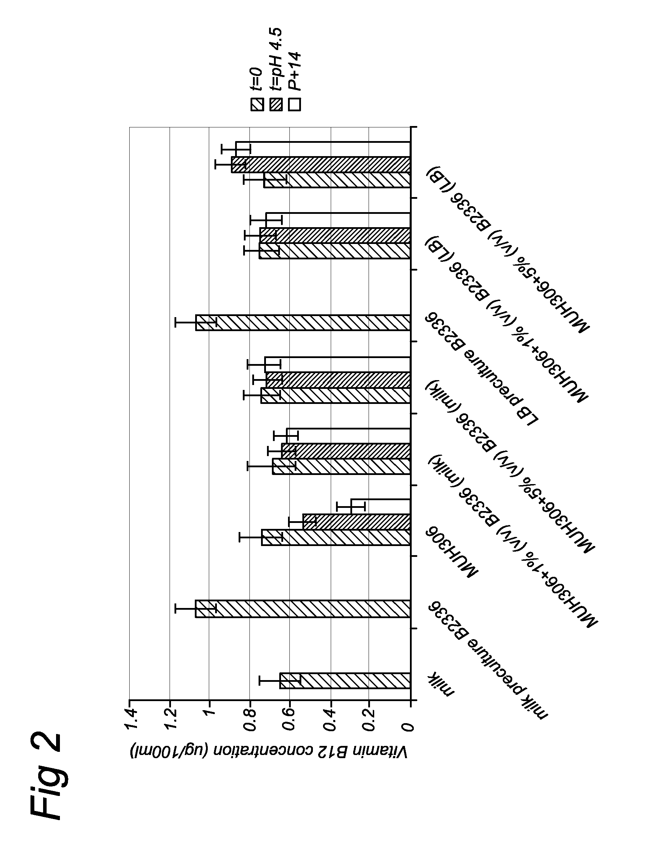

*Propionibacterium freudenreichi* spp *freudenreichi* B2336 also exhibits no growth during fermentation of the milk and/or storage of the yoghurt (see table 3), but nevertheless produces a considerable amount of vitamin B12 (see fig. 2). The increase in vitamin B12 is about a factor 2 - 3 in comparison with the reference yoghurt. *Propionibacterium* B2336 also produced similar amounts of propionic acid as shown for the other *Propionibacterium* strains above.

### Example 3

In contrast to the foregoing strains *Lb. reuteri* B1533 exhibits a tenfold increase in cell counts during yoghurt fermentation (see table 4), but no growth is observed during 14 days storage at 4 °C.

The content of *in situ* produced vitamin B12 was slightly increased during fermentation, but more importantly especially consumption of vitamin B12 by the yoghurt culture during storage was counterbalanced by the vitamin B12 production by this *Lactobacillus reuteri* strain, so that in the fmal yoghurt product the content of *in situ* produced vitamin B12 was increased by a factor 2-4 with respect to the reference yoghurt.

**Table 4. Cell counts (cfu/ml) Lactobacillus reuteri B1533 in preculture and prepared yoghurt.**

| | t=0 | t=pH 4.5 | t = P+14 |
|---|---|---|---|
| Preculture B1533 | 3.5 x 10⁸ | | |
| MUH306 + 1%(v/v) B1533 | 1.9 x 10⁵ | 5.0 x 10⁶ | 2.2 x 10⁶ |
| MUH306 + 5%(v/v) B1533 | 1.2 x 10⁶ | 1.6 x 10⁷ | 2.0 x 10⁷ |

The chemical composition of the yoghurt which was prepared with *Lactobacillus reuteri* B1533 was also determined. Surprisingly it was found that *Lactobacillus reuteri* B1533 also produced propionic acid, which provided the thus prepared yoghurt again with a "mild sweet taste" with respect to the reference yoghurt. In addition, the thus prepared yoghurt contained an increased amount of lactic acid and acetic acid.

**Table 5. Chemical composition of yoghurt prepared with Lactobacillus reuteri B1533.**

| | Lactic acid (mg/kg) | Acetic acid (mg/kg) | Propionic acid (mg/kg) |
|---|---|---|---|
| MUH306 reference t = pH 4.5 | 7.52 | 18 | - |
| MUH306 reference t=P+ 14 | 8.43 | 19 | - |
| MUH306 + 1% (v/v) B1533 t = pH 4.5 | 8.02 | 67 | 65 |
| MUH306 + 1% (v/v) B1533 t=P+ 14 | 9.15 | 72 | 57 |
| MUH306 + 5% (v/v) B1533 t = pH 4.5 | 8.38 | 87 | 63 |
| MUH306 + 5% (v/v) B1533 t=P+ 14 | 9.44 | 92 | 68 |

| | | | |
|---|---|---|---|
| -: not detectable | | | |

## Claims

1. A fermented milk product having an increased content of *in situ* produced vitamin B12, wherein at least bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* are present.

2. The fermented milk product according to claim 1, wherein the content of *in situ* produced vitamin B12 in the fermented milk product is at least 120 % of the content of *in situ* produced vitamin B12, which is achieved in absence of at least bacteria selected from the group consisting of bacteria of the strain *Propionibacterium freudenreichi* spp shermani B369, bacteria of the subspecies *Propionibacterium freudenreichi spp freudenreichi* and bacteria of the species *Lactobacillus reuteri.*

3. The fermented milk product according to claim 1 or 2, wherein at least bacteria of the strain *Propionibacterium freudenreichi* spp shermani B369 and/or bacteria of the subspecies *Propionibacterium freudenreichi* spp *freudenreichi* are present.

4. The fermented milk product according to claim 3, wherein at least bacteria of the subspecies *Propionibacterium freudenreichi* spp *freudenreichi,* preferably of the strain *Propionibacterium freudenreichi* spp *freudenreichi* B374 and/or *Propionibacterium freudenreichi spp freudenreichi* B2336, are present.

5. The fermented milk product according to claim 1 or 2, wherein at least bacteria of the species *Lactobacillus reuteri,* preferably of the strain *Lactobacillus reuteri* B1533, are present.

6. The fermented milk product according to any one of the preceding claims, wherein said fermented milk product is yoghurt.

7. A method of preparing a fermented milk product having an increased content of *in situ* produced vitamin B12, wherein milk is fermented making use of a common starter culture, and wherein bacteria selected from the group consisting of bacteria of the strain *Propionibacterium freudenreichi* spp shermani B369, bacteria of the subspecies *Propionibacterium freudenreichi* spp *freudenreichi* and bacteria of the species *Lactobacillus reuteri* are added to the milk.

8. The method according to claim 7, wherein said bacteria are precultured in a medium that enhances *in situ* vitamin B12 production.

9. The method according to claim 7 or 8, wherein said bacteria are of the strain *Propionibacterium freudenreichi* spp shermani B369 and/or of the subspecies *Propionibacterium freudenreichi spp freudenreichi.*

10. The method according to claim 9, wherein said bacteria are of the subspecies *Propionibacterium freudenreichi* spp *freudenreichi,* preferably of the strain *Propionibacterium freudenreichi spp freudenreichi* B374 and/or *Propionibacterium freudenreichi spp freudenreichi* B2336.

11. The method according to claim 7 or 8, wherein said bacteria are of the species *Lactobacillus reuteri,* preferably of the strain *Lactobacillus reuteri* B1533.

12. The method according to any one of claims 7 - 11, wherein said fermented milk product is yoghurt.

13. Use of bacteria selected from the group consisting of bacteria of the strain *Propionibacterium freudenreichi* spp shermani B369, of the subspecies *Propionibacterium freudenreichi spp freudenreichi* and of the species *Lactobacillus reuteri*, for increasing the content of *in situ* produced vitamin B12 in a fermented milk product.

14. Use according to claim 13, wherein said bacteria are selected from the group consisting of bacteria of the strain *Propionibacterium freudenreichi* spp shermani B369 and of the subspecies *Propionibacterium freudenreichi spp freudenreichi.*

15. Use according to claim 14, wherein said bacteria are bacteria of the subspecies *Propionibacterium freudenreichi* spp *freudenreichi,* preferably of the strain *Propionibacterium freudenreichi spp freudenreichi* B374 and/or *Propionibacterium freudenreichi spp freudenreichi* B2336.

16. Use according to claim 13, wherein said bacteria are bacteria from the species *Lactobacillus reuteri,* preferably of the strain *Lactobacillus reuteri* B1533.

17. Use according to any one of claims 13 - 16, wherein said fermented milk product is yoghurt.
